# EUROPEAN PATENT APPLICATION

(11) **EP 4 068 431 A2**
(43) Date of publication of application: **05.10.2022**
(21) Application number: 22173220.9
(22) Date of filing: 23.08.2019
(51) Int. Cl.: H01M 4/38, H01M 4/48, H01M 4/62, H01M 4/36, H01M 4/587, H01M 10/052, C01B 33/02, C01B 33/113, H01M 4/131, H01M 4/134, H01M 4/485, H01M 10/0525, H01M 4/02

(54) **SILICON-BASED COMPOSITE, NEGATIVE ELECTRODE COMPRISING THE SAME, AND LITHIUM SECONDARY BATTERY**

(30) Priority: 23.08.2018 KR 20180098722; 23.08.2018 KR 20180098723
(62) Divisional of application: 19851556.1
(71) Applicant: LG Energy Solution, Ltd., Seoul 07335 (KR)
(72) Inventor: Park, Se Mi, 34122 Yuseong-gu, Daejeon (KR); Lee, Yong Ju, 34122 Yuseong-gu, Daejeon (KR); Lee, Su Min, 34122 Yuseong-gu, Daejeon (KR)
(74) Representative: Hoffmann Eitle

(57) **Abstract**

Provided is a silicon-based composite which includes silicon-based particles and one or more doping metals selected from the group consisting of Mg, Ca, Al, Na and Ti, wherein, in the silicon-based particles, there is a doping metal concentration gradient from the particle center toward the particle surface.

## Description

### [Technical Field]

### Cross-Reference to Related Application

This application claims priority to and the benefit of Korean Patent Application No. 10-2018-0098722, filed on August 23, 2018, and Korean Patent Application No. 10-2018-0098723, filed on August 23, 2018, the disclosures of which are incorporated herein by reference in their entirety.

### Technical Field

The present invention relates to a silicon-based composite, a negative electrode including the same, and a lithium secondary battery, and more particularly, to a silicon-based composite which includes silicon-based particles having a metal-element concentration gradient, a negative electrode which includes the same as a negative electrode active material, and a lithium secondary battery.

### [Background Art]

As the technology for mobile devices is developed and the demand for mobile devices increases, the demand for secondary batteries as a power source is rapidly increasing, and among secondary batteries, lithium secondary batteries having a high energy density, a high action potential, a long cycle lifespan and a low self-discharge rate have been commercialized and widely used.

Lithium secondary batteries are secondary batteries that generally consist of a positive electrode including a positive electrode active material, a negative electrode including a negative electrode active material, a separator and an electrolyte and are charged and discharged by the intercalation and deintercalation of lithium ions. Due to having advantageous features such as a high energy density, a large electromotive force and the ability to exhibit high capacity, lithium secondary batteries have been applied to various fields.

Meanwhile, as a positive electrode active material for constituting the positive electrode of a lithium secondary battery, metal oxides such as LiCoO₂, LiMnO₂, LiMn₂O₄ or LiCrO₂ have been used, and as a negative electrode active material for constituting the negative electrode, materials such as metal lithium, carbon-based materials (e.g., graphite, activated carbon or the like), silicon oxides (SiOₓ) or the like have been used. Among the negative electrode active materials, metal lithium was mainly used initially, but since the phenomenon whereby lithium atoms grew on the metal lithium surface, damaging the separator and accordingly damaging the battery, occurred as charging-discharging cycles progressed, carbon-based materials have been mainly used recently. However, carbon-based materials have the disadvantage of small capacity, having a theoretical capacity of only about 400 mAh/g.

Therefore, various studies have been conducted to replace such a carbon-based material as a negative electrode active material with a silicon (Si) material having a high theoretical capacity (4,200 mAh/g). The reaction scheme for the case where lithium is intercalated into silicon is as follows:

[Reaction Scheme 1] 22Li+5Si=Li₂₂Si₅

However, most silicon negative electrode materials have the disadvantage of expanding the silicon volume up to 300% due to lithium intercalation, causing the negative electrode to be destroyed and not exhibit excellent cycle characteristics.

Meanwhile, silicon oxides have the advantage of excellent lifetime performance and relatively small volume expansion during charging and discharging compared to silicon (Si) but have the disadvantage of a low initial efficiency. Accordingly, for the purpose of improving the initial efficiency, a material in which a metal element is doped into silicon oxide has been developed.

However, there is a tendency that as the amount of the doping metal element increases, efficiency increases but capacity decreases. In addition, although the material in which a metal element is doped into silicon oxide undergoes a relatively small volume change during charging and discharging compared to silicon oxide (SiO), there is still a need for measures to improve fading mechanisms caused by the volume change, such as pulverization, contact losses caused by contact with conducting agents and a current collector, and the formation of an unstable solid-electrolyte interphase (SEI).

### [Related Art]

### [Patent Document]

Japanese Patent Publication No. 2016-009644 A

### [Disclosure]

### [Technical Problem]

The present invention is directed to providing a silicon-based composite which, when used as a negative electrode active material, undergoes reduced volume expansion upon lithium ion intercalation and thereby allows the performance of a lithium secondary battery to be further improved.

The present invention is also directed to providing a silicon-based composite which, when used as a negative electrode active material, exhibits high aqueous stability and low reactivity with an electrolyte, and thereby has excellent cycle characteristics and allows the performance of a lithium secondary battery to be improved.

The present invention is also directed to providing a negative electrode for a lithium secondary battery, which includes the silicon-based composite.

The present invention is also directed to providing a lithium secondary battery which includes the negative electrode for a lithium secondary battery.

### [Technical Solution]

One aspect of the present invention provides a silicon-based composite which includes: silicon-based particles; and one or more doping metals selected from the group consisting of Mg, Ca, Al, Na and Ti, wherein, in the silicon-based particles, there is a doping metal concentration gradient from the particle center toward the particle surface.

Another aspect of the present invention provides a negative electrode for a lithium secondary battery, which includes: a negative electrode current collector; and a negative electrode active material layer formed on the negative electrode current collector, wherein the negative electrode active material layer includes the above-described silicon-based composite.

Still another aspect of the present invention provides a lithium secondary battery which includes the above-described negative electrode for a lithium secondary battery.

### [Advantageous Effects]

The silicon-based composite of the present invention may include silicon-based particles and a doping metal, and the silicon-based particles may have a concentration gradient in which the concentration of the doping metal gradually increases from the particle center toward the particle surface. In this case, since the volume expansion of the silicon-based particles can be reduced due to a high metal content at the particle surface, further improved lithium secondary battery performance, for example, excellent lifetime characteristics, can be attained.

In addition, the silicon-based composite of the present invention may include silicon-based particles and a doping metal, and the silicon-based particles may have a concentration gradient in which the concentration of the doping metal gradually decreases from the particle center toward the particle surface. In this case, since low reactivity with an electrolyte and high aqueous stability can be attained due to a low metal content at the particle surface, further improved lithium secondary battery performance can be attained.

### [Description of Drawings]

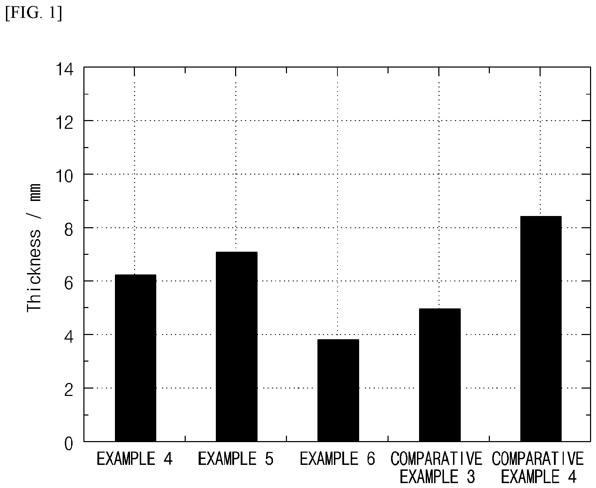

FIG. 1 is an image illustrating the results of evaluating the reactivity of the silicon-based composites of Examples 4 to 6 and Comparative Examples 3 and 4 before forming a carbon coating layer with an electrolyte at high temperature.

### [Modes of the Invention]

Hereinafter, the present invention will be described in more detail to facilitate understanding of the present invention.

Terms and words used in this specification and claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technical spirit of the present invention.

One aspect of the present invention provides a silicon-based composite which includes: silicon-based particles; and one or more doping metals selected from the group consisting of Mg, Ca, Al, Na and Ti, wherein, in the silicon-based particles, there is a doping metal concentration gradient from the particle center toward the particle surface.

The silicon-based composite may include silicon-based particles which include one or more selected from the group consisting of Si, silicon oxide particles (SiOₓ, 0≤x<2) and mixtures thereof. The silicon oxide particle may be a composite composed of amorphous SiO₂ and crystalline Si.

The silicon-based particle may be a primary particle formed as a single mass, or a secondary particle formed by the assembly of the primary particles.

The doping metal may be one or more selected from the group consisting of Mg, Ca, Al, Na and Ti, specifically one or more selected from the group consisting of Mg and Ca, more specifically Mg. When a silicon-based composite including the above-described doping metal is used as a negative electrode active material, since the silicon-based composite is more resistant to moisture and less reactive with an electrolyte than Li as a doping metal, less gas is generated due to a side reaction with the electrolyte, and therefore, the cycle characteristics of the battery can be further improved.

The doping metal may form a metal silicate or metal oxide with the silicon-based particles, specifically Si and/or silicon oxide particles (SiOₓ, 0≤x<2), included in the silicon-based composite. Therefore, according to one exemplary embodiment of the present invention, the silicon-based composite may include: one or more selected from the group consisting of Si, silicon oxide particles (SiOₓ, 0≤x<2) and mixtures thereof; and a metal compound including at least one of a metal oxide and a metal silicate.

The metal silicate may include a silicate of the doping metal, that is, a silicate of one or more metals selected from the group consisting of Mg, Ca, Al, Na and Ti, specifically a silicate of one or more metals selected from the group consisting of Mg and Ca, more specifically a silicate of Mg.

The metal oxide may include an oxide of the doping metal, that is, an oxide of one or more metals selected from the group consisting of Mg, Ca, Al, Na and Ti, specifically an oxide of one or more metals selected from the group consisting of Mg and Ca, more specifically an oxide of Mg.

The metal compound including at least one of the metal oxide and the metal silicate may be at least one metal compound selected from the group consisting of Mg₂SiO₄, MgSiO₃, Mg₂Si and MgO.

In the present invention, the silicon-based particles may have a concentration gradient in which the concentration of the doping metal gradually increases from the particle center toward the particle surface. Here, the expression that there is a concentration gradient in which the concentration of a doping metal gradually increases encompasses both continuous and discontinuous increases in the concentration of the doping metal.

The concentration of the doping metal in the silicon-based particles may be increased such that there is a continuous concentration gradient from the particle center toward the particle surface. When the concentration of the doping metal is increased such that there is a continuous concentration gradient from the particle center toward the particle surface, the volume expansion inside the silicon-based particles can be more effectively absorbed and suppressed by the exterior of the silicon-based particles.

The silicon-based composite may include the doping metal in an amount of 0.1 wt% to 30 wt%, specifically 1 wt% to 25 wt%, more specifically 3 wt% to 20 wt%, even more specifically 4 wt% to 15 wt%. When the silicon-based composite includes the doping metal in the above-described weight range, the silicon-based composite can have high capacity and the initial efficiency thereof can be more effectively increased.

In a silicon-based particle of the silicon-based composite, the concentration of the doping metal at Rs₁₀, which is the point corresponding to 10% of the total volume of the silicon-based particle from the particle surface toward the particle center, may be 1% to 1,000% higher, specifically 10% to 850% higher, more specifically 50% to 500% higher, even more specifically 250% to 450% higher than the concentration of the doping metal at Rc₁₀, which is the point corresponding to 10% of the total volume of the silicon-based particle from the particle center toward the particle surface. When the doping metal has the above-described specific concentration gradient, the silicon-based composite can have high initial efficiency, and the volume expansion/contraction thereof during charging and discharging can be effectively suppressed.

The silicon-based composite may be prepared by a method of mixing the silicon-based particles and the doping metal and thermally treating the mixture under a reduced-pressure atmosphere so that a vapor can be generated from the silicon-based particles and the doping metal at the same time, causing the reactants in a gas phase to react. When the temperature of the heat-treatment is increased over time, since the rate at which the doping metal vapor is generated is increased, the relative amount of the doping metal vapor capable of reacting with the vapor derived from the silicon-based particles is increased, and accordingly, the concentration of the doping metal can be increased. Therefore, when the temperature of the heat-treatment is increased over time, a concentration gradient can be formed in the silicon-based particles such that the concentration of the doping metal gradually increases from the particle center toward the particle surface.

In the present invention, the silicon-based particles may have a concentration gradient in which the concentration of the doping metal gradually decreases from the particle center toward the particle surface. Here, the expression that there is a concentration gradient in which the concentration of a doping metal gradually decreases encompasses both continuous and discontinuous decreases in the concentration of the doping metal.

The concentration of the doping metal in the silicon-based particles may be decreased such that there is a continuous concentration gradient from the particle center toward the particle surface. When the concentration of the doping metal is decreased such that there is a continuous concentration gradient from the particle center toward the particle surface, excellent aqueous stability and lower reactivity with an electrolyte can be exhibited.

The silicon-based composite may include the doping metal in an amount of 0.1 wt% to 30 wt%, specifically 1 wt% to 25 wt%, more specifically 3 wt% to 20 wt%, even more specifically 4 wt% to 15 wt%. When the silicon-based composite includes the doping metal in the above-described weight range, the initial efficiency in the case where the silicon-based composite is used as a negative electrode active material can be more effectively increased, and since the production amount of the metal silicate or metal oxide is not increased more than necessary, an appropriate capacity can be attained, and side reactions with an electrolyte can be effectively prevented.

In addition, in a silicon-based particle of the silicon-based composite, the concentration of the metal at Rc₁₀, which is the point corresponding to 10% of the total volume of the silicon-based particle from the particle center toward the particle surface, may be 1% to 1,000% higher, specifically 10% to 850% higher, more specifically 50% to 500% higher, even more specifically 250% to 450% higher than the concentration of the metal at Rs₁₀, which is the point corresponding to 10% of the total volume of the silicon-based particle from the particle surface toward the particle center. When the metal has the above-described concentration gradient, the initial efficiency in the case where the silicon-based composite is used as a negative electrode active material can be high, and the aqueous stability of the silicon-based negative electrode active material can be further improved and the reactivity with an electrolyte can be further reduced due to a low metal content on the exterior.

The silicon-based composite may be prepared, for example, by a method of mixing the silicon-based particles and the doping metal and thermally treating the mixture under a reduced-pressure atmosphere so that a vapor can be generated from the silicon-based particles and the doping metal at the same time, causing the reactants in a gas phase to react. When the temperature of the heat-treatment is reduced over time, since the rate at which the doping metal vapor is generated is reduced, the relative amount of the doping metal vapor capable of reacting with the vapor derived from the silicon-based particles is reduced, and accordingly, the concentration of the doping metal can be reduced. Therefore, when the temperature of the heat-treatment is reduced over time, a concentration gradient can be formed in the silicon-based particles such that the concentration of the doping metal gradually decreases from the particle center toward the particle surface.

The silicon-based composite may have an average particle diameter (D₅₀) of 0.01 µm to 30 µm, specifically 0.05 to 20 µm, more specifically 0.1 to 10 µm.

When the silicon-based composite has an average particle diameter of 0.01 µm or more, since the density of the electrode is prevented from being lowered, an appropriate capacity per unit volume can be attained. On the other hand, when the average particle diameter is 30 µm or less, the slurry for forming the electrode can be suitably applied with a uniform thickness.

In the present invention, the average particle diameter (D₅₀) of the silicon-based composite may be defined as a particle diameter corresponding to the 50^{th} percentile in the particle diameter distribution curve. Although not particularly limited, the average particle diameter may be measured using, for example, a laser diffraction method or a scanning electron microscope (SEM) image. The laser diffraction method generally allows the measurement of a particle diameter ranging from a submicron level to several millimeters, and may produce a result having reproducibility and high resolution.

The silicon-based composite may further include a carbon coating layer formed on the silicon-based particle.

When the silicon-based composite further includes the carbon coating layer, the expansion of the silicon-based particles during charging and discharging can be suppressed, and conductivity can be further improved.

The carbon coating layer may be included in an amount of 0.1 wt% to 50 wt%, specifically 1 wt% to 25 wt%, more specifically 3 wt% to 15 wt%, even more specifically 5 wt% to 10 wt%, based on the entire silicon-based composite. When the weight of the carbon coating layer satisfies the above-described range, the carbon coating layer is formed to an appropriate degree and thus can suppress the expansion of the silicon-based particles during charging and discharging without causing the problem of degrading initial efficiency by blocking the conductive passage for lithium ion migration, and can further improve conductivity.

The carbon coating layer may have a thickness of 5 nm to 100 nm, specifically 10 nm to 100 nm. When the thickness of the carbon coating layer satisfies the above-described range, the carbon coating layer can suppress the expansion of the silicon-based particles during charging and discharging while allowing the conductive passage of the silicon-based composite to be maintained, and can further improve conductivity.

Another aspect of the present invention provides a negative electrode for a lithium secondary battery, which includes the above-described silicon-based composite.

Specifically, the negative electrode for a lithium secondary battery includes a negative electrode current collector and a negative electrode active material layer formed on the negative electrode current collector, wherein the negative electrode active material layer includes the above-described silicon-based composite as a negative electrode active material.

The negative electrode active material layer may further include a carbon-based negative electrode active material along with the above-described silicon-based composite.

The carbon-based negative electrode active material may include at least one selected from the group consisting of low-crystallinity carbon and high-crystallinity carbon. Representative examples of the low-crystallinity carbon include soft carbon and hard carbon, and representative examples of the high-crystallinity carbon include natural graphite, Kish graphite, pyrolytic carbon, mesophase pitch-based carbon fiber, meso-carbon microbeads, mesophase pitches, and high-temperature calcined carbon such as petroleum or coal tar pitch-derived cokes and the like.

When the negative electrode active material layer includes the silicon-based composite and the carbon-based negative electrode active material, the negative electrode active material layer may include the silicon-based composite and the carbon-based negative electrode active material in a weight ratio of 1:99 to 90:10, specifically 2:98 to 50:50, more specifically 3:97 to 30:70. When the silicon-based composite and the carbon-based negative electrode active material are used in the above-described weight ratio, a high capacity can be attained, and excellent initial efficiency and excellent cycle characteristics can be appropriately balanced.

The negative electrode active material layer may further include, along with the above-described silicon-based composite, a material capable of alloying with lithium as a negative electrode active material.

The material capable of alloying with lithium may be one or more selected from the group consisting of Si, SiOₓ, Sn, SnOₓ, Ge, GeOₓ, Pb, PbOₓ, Ag, Mg, Zn, ZnOₓ, Ga, In, Sb and Bi.

The negative electrode for a lithium secondary battery may be produced by a conventional method known in the art, for example, by preparing a slurry for a negative electrode active material by mixing and stirring the negative electrode active material and additives such as a binder, a conducting agent and the like, applying the slurry to a negative electrode current collector, and drying and compressing the slurry.

The binder may be used for maintaining a molded body by the cohesion of the negative electrode active material particles. The binder is not particularly limited as long as it is a conventional binder used in the preparation of a slurry for a negative electrode active material. For example, a non-aqueous binder such as polyvinyl alcohol, carboxymethyl cellulose, hydroxypropyl cellulose, diacetylene cellulose, polyvinyl chloride, polyvinylpyrrolidone, polytetrafluoroethylene (PTFE), polyvinylidene fluoride (PVdF), polyethylene, polypropylene or the like may be used, or an aqueous binder such as one or a mixture of two or more selected from the group consisting of acrylonitrile-butadiene rubber, styrene-butadiene rubber and acrylic rubber may be used. The aqueous binders are economical, environmentally-friendly and harmless to a worker's health compared to the non-aqueous binders and, by providing a better cohesive effect than the non-aqueous binders, can increase the proportion of an active material per the same volume and thus realizes a high capacity. Specifically, as the aqueous binder, styrene-butadiene rubber may be used.

The binder may be included in an amount of 10 wt% or less, specifically 0.1 wt% to 10 wt%, with respect to the total weight of the slurry for a negative electrode active material. The binder content of less than 0.1 wt% is not preferred because the effect of using the binder is insignificant, and the binder content of more than 10 wt% is not preferred because, since the relative content of the active material has decreased due to the increase in binder content, there is a risk that a capacity per unit volume may decrease.

The conducting agent is not particularly limited as long it does not cause a chemical change in the battery and has conductivity, and examples of the conducting agent include: graphite such as natural graphite, artificial graphite or the like; carbon black such as acetylene black, Ketjen black, channel black, furnace black, lamp black, thermal black or the like; a conductive fiber such as carbon fiber, metal fiber or the like; a metal powder such as carbon fluoride powder, aluminum powder, nickel powder or the like; a conductive whisker such as zinc oxide, potassium titanate or the like; a conductive metal oxide such as titanium oxide or the like; and a conductive material such as a polyphenylene derivative or the like. The conducting agent may be used in an amount of 1 wt% to 9 wt% based on the total weight of the slurry for a negative electrode active material.

The negative electrode current collector may have a thickness of 3 µm to 500 µm. The negative electrode current collector is not particularly limited as long as it does not cause a chemical change in the battery and has conductivity. For example, copper, gold, stainless steel, aluminum, nickel, titanium, calcined carbon, copper or stainless steel whose surface has been treated with carbon, nickel, titanium, silver or the like, an aluminum-cadmium alloy or the like may be used. In addition, the negative electrode current collector may have fine irregularities formed in a surface thereof to increase the adhesion of a negative electrode active material, and the negative electrode current collector may be used in any of various forms such as a film, a sheet, a foil, a net, a porous material, a foam, a non-woven fabric and the like.

Still another aspect of the present invention provides a lithium secondary battery which includes the above-described negative electrode for a lithium secondary battery.

The lithium secondary battery includes the above-described negative electrode for a lithium secondary battery, a positive electrode disposed at a position facing the negative electrode, a separator interposed between the negative electrode for a lithium secondary battery and the positive electrode, and an electrolyte.

The positive electrode may be produced by a conventional method known in the art. For example, the positive electrode may be produced by preparing a slurry by mixing and stirring a positive electrode active material, a solvent and, if necessary, a binder, a conducting agent and a dispersing agent, applying (forming a coating of) the slurry to a current collector made of a metal, and compressing and subsequently drying the slurry.

The current collector made of a metal is a metal which has high conductivity and to which the slurry for a positive electrode active material can easily adhere, and is not particularly limited as long as it does not cause a chemical change in the battery and has high conductivity in a voltage range of the battery. For example, stainless steel, aluminum, nickel, titanium, calcined carbon, or aluminum or stainless steel whose surface has been treated with carbon, nickel, titanium, silver or the like may be used. In addition, the current collector may have fine irregularities formed in a surface thereof to increase the adhesion of a positive electrode active material. The current collector may be used in any of various forms such as a film, a sheet, a foil, a net, a porous material, a foam, a non-woven fabric and the like, and may have a thickness of 3 to 500 µm.

Examples of the positive electrode active material may include: a lithium cobalt oxide (LiCoO₂); a lithium nickel oxide (LiNiO₂); Li[NiₐCo_{b}Mn_{c}M¹_{d}]O₂ (here, M¹ is one or more elements selected from the group consisting of Al, Ga and In, and 0.3≤a<1.0, 0≤b≤0.5, 0≤c≤0.5, 0≤d≤0.1, and a+b+c+d=1); a layered compound such as Li(LiₑM²_{f-e-f'}M³_{f'})O_{2-g}A_{g} (here, 0≤e≤0.2, 0.6≤f≤1, 0≤f'≤0.2, 0≤g≤0.2, M² includes Mn and one or more selected from the group consisting of Ni, Co, Fe, Cr, V, Cu, Zn and Ti, M³ is one or more selected from the group consisting of Al, Mg and B, and A is one or more selected from the group consisting of P, F, S and N) or a compound substituted with one or more transition metals; a lithium manganese oxide such as Li₁₊ₕMn₂₋ₕO₄ (here, 0≤h≤0.33), LiMnO₃, LiMn₂O₃, LiMnO₂ or the like; a lithium copper oxide (Li₂CuO₂); a vanadium oxide such as LiV₃O₈, V₂O₅, Cu₂V₂O₇ or the like; a Ni-site-type lithium nickel oxide represented by the chemical formula LiNi₁₋ᵢM⁴ᵢO₂ (here, M⁴ is Co, Mn, Al, Cu, Fe, Mg, B or Ga, and 0.01≤i≤0.3); a lithium manganese composite oxide such as one represented by the chemical formula LiMn₂₋ⱼM⁵ⱼO₂ (here, M⁵ is Co, Ni, Fe, Cr, Zn or Ta, and 0.01≤j≤0.1) or one represented by the chemical formula Li₂Mn₃M⁶O₈ (here, M⁶ is Fe, Co, Ni, Cu or Zn); LiMn₂O₄ in which some Li ions in the chemical formula have been substituted with alkaline earth metal ions; a disulfide compound; LiFe₃O₄ and Fe₂(MoO₄)₃; and the like, but the present invention is not limited thereto.

As the solvent for forming a positive electrode, an organic solvent such as N-methyl pyrrolidone (NMP), dimethyl formamide (DMF), acetone or dimethyl acetamide or water or the like may be used, and these solvents may be used alone or in a combination of two or more. The usage amount of the solvent is sufficient if it allows the positive electrode active material, a binder and a conducting agent to be dissolved and dispersed considering the coating thickness and production yield of the slurry.

As the binder, various binder polymers such as a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated-EPDM, styrene-butadiene rubber (SBR), fluororubber, polyacrylic acid, polymers in which hydrogens thereof have been substituted with Li, Na, Ca or the like, various copolymers thereof, and the like may be used.

The conducting agent is not particularly limited as long as it does not cause a chemical change in the battery and has conductivity, and examples of a material usable as the conducting agent include: graphite such as natural graphite, artificial graphite or the like; carbon black such as acetylene black, Ketjen black, channel black, furnace black, lamp black, thermal black or the like; a conductive fiber such as carbon fiber, metal fiber or the like; a conductive tube such as carbon nanotube; a metal powder such as fluorocarbon powder, aluminum powder, nickel powder or the like; a conductive whisker such as zinc oxide, potassium titanate or the like; a conductive metal oxide such as titanium oxide or the like; and a conductive material such as a polyphenylene derivative or the like. The conducting agent may be used in an amount of 1 wt% to 20 wt% based on the total weight of the positive electrode slurry.

As the dispersing agent, an aqueous dispersing agent or an organic dispersing agent such as N-methyl-2-pyrrolidone or the like may be used.

In addition, as the separator, a conventional porous polymer film conventionally used as a separator, for example, a porous polymer film formed of a polyolefin-based polymer such as an ethylene homopolymer, a propylene homopolymer, an ethylene/butene copolymer, an ethylene/hexene copolymer, an ethylene/methacrylate copolymer or the like or a stacked structure having two or more layers thereof, may be used. Alternatively, a common porous non-woven fabric, for example, a non-woven fabric made of high-melting-point glass fiber, polyethylene terephthalate fiber or the like may be used, but the present invention is not limited thereto.

As a lithium salt that may be used as the electrolyte in the present invention, a lithium salt that is conventionally used in an electrolyte for a lithium secondary battery may be used without limitation. For example, the lithium salt may have any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ as an anion.

As an electrolyte to be used in the present invention, an organic liquid electrolyte, an inorganic liquid electrolyte, a solid polymer electrolyte, a gel-type polymer electrolyte, an inorganic solid electrolyte, a molten-type inorganic electrolyte or the like that is usable in the preparation of a lithium secondary battery may be used, but the present invention is not limited thereto.

The type of the lithium secondary battery of the present invention may be, but is not particularly limited to, a cylindrical type using a can, a prismatic type, a pouch type, a coin type or the like.

The lithium secondary battery of the present invention may be used not only in a battery cell used as a power source of a small device but also as a unit battery in medium-to-large-sized battery modules including a plurality of battery cells.

Preferable examples of a medium-to-large-sized device include electric vehicles, hybrid electric vehicles, plug-in hybrid electric vehicles, a system for storing electric power and the like, but the present invention is not limited thereto.

### Examples

Although the present invention will be hereinafter described in more detail by way of examples and experimental examples, the present invention is not limited to these examples and experimental examples. The examples of the present invention may have various modifications, and the scope of the present invention should not be construed as being limited to the examples described below. The examples of the present invention are provided to more completely explain the present invention to those of ordinary skill in the art.

### <Preparation of silicon-based composite: 1>

### Example 1

A powder including a Si powder and a silicon oxide (SiO₂) powder uniformly mixed in a molar ratio of 1:1 and magnesium (Mg) were thermally treated at 1,400 °C and 700 °C, respectively, under a reduced-pressure atmosphere so that a silicon oxide vapor derived from the Si and the silicon oxide and an Mg vapor were generated at the same time, and thereby reactants in a gas phase were reacted. In the case of Mg, the heat-treatment temperature was raised from 700 °C to 900 °C at a rate of 5 °C/min so that the rate of Mg vapor generation was increased and the relative amount of Mg capable of reacting with the silicon oxide vapor was accordingly increased. The reacted composite was precipitated by cooling and pulverized with a jet mill, and thereby silicon-based composite particles which had an average particle diameter (D₅₀) of about 5 µm and in which Mg was contained so as to have a concentration gradient were obtained.

The obtained silicon-based composite was introduced into a tube-shaped (tubular) furnace and subjected to chemical vapor deposition (CVD) under a mixed gas of argon (Ar) and methane (CH₄), and thereby a silicon-based composite which included a formed carbon coating layer having a carbon content of about 5 wt% and in which an Mg compound was contained so as to have a concentration gradient was obtained.

As a result of carrying out inductively coupled plasma (ICP) analysis to determine the Mg content of the obtained silicon-based composite, it was found that the Mg content was about 8 wt% based on the total weight of the silicon-based composite. The Mg content according to a position in the silicon-based composite particles was determined using an SEM-EDAX analysis instrument (80 mm² EDS detector, EMAX manufactured by HORIBA, Ltd.).

In the silicon-based particles, the concentration of Mg at a central portion (Rc₁₀) was about 3 wt% based on the total weight of the relevant portion, and the concentration of Mg at a surface portion (Rs₁₀) was about 12 wt% based on the total weight of the relevant portion.

The ICP analysis was performed by the following method. For the ICP analysis, a predetermined amount (about 0.01 g) of the obtained silicon-based composite was precisely aliquoted, transferred to a platinum crucible, and completely decomposed on a hot plate by adding nitric acid, hydrofluoric acid and sulfuric acid thereto. By using an inductively coupled plasma atomic emission spectrometer (ICP-AES, Perkin-Elmer 7300), a reference calibration curve was obtained by measuring the intensity of a standard liquid, which was prepared using a standard solution (5 mg/kg), at an intrinsic wavelength of an Mg element. Subsequently, a pre-treated sample solution and a blank sample were introduced into the spectrometer, and by way of measuring the intensity of each component to calculate an actual intensity, calculating the concentration of each component based on the obtained calibration curve, and performing a conversion such that the sum of the calculated concentrations of the components was equal to a theoretical value, the Mg content of the obtained silicon-based composite was determined.

### Example 2

A silicon-based composite was prepared in the same manner as in Example 1 except that the heat-treatment temperature for the doping of Mg was raised from 750 °C to 850 °C at a rate of 3 °C/min.

As a result of determining the Mg content of the silicon-based composite using an SEM-EDAX analysis instrument, it was found that in the silicon-based particles, the concentration of Mg at a central portion (Rc₁₀) was about 7 wt% based on the total weight of the relevant portion, and the concentration of Mg at a surface portion (Rs₁₀) was about 8.5 wt% based on the total weight of the relevant portion.

### Example 3

A silicon-based composite was prepared in the same manner as in Example 1 except that the heat-treatment temperature for the doping of Mg was raised from 650 °C to 950 °C at a rate of 10 °C/min.

As a result of determining the Mg content of the silicon-based composite using an SEM-EDAX analysis instrument, it was found that in the silicon-based particles, the concentration of Mg at a central portion (Rc₁₀) was about 1.5 wt% based on the total weight of the relevant portion, and the concentration of Mg at a surface portion (Rs₁₀) was about 13.5 wt% based on the total weight of the relevant portion.

### Comparative Example 1

A silicon-based composite which had an average particle diameter (D₅₀) of about 5 µm and in which an Mg compound was contained so as not to have a concentration gradient was prepared in the same manner as in Example 1 except that the heat-treatment temperature for the doping of Mg was not raised and constantly maintained at 700 °C.

As a result of carrying out ICP analysis to determine the Mg content of the obtained silicon-based composite, it was found that the Mg content was about 8 wt%.

### Comparative Example 2

Silicon monoxide (SiO) having an average particle diameter (D₅₀) of about 4 µm was introduced into a tube-shaped (tubular) furnace and subjected to CVD under a mixed gas of Ar and CH₄, and thereby silicon-based particles which had an average particle diameter (D₅₀) of about 5 µm and included a formed carbon coating layer having a carbon content of about 5 wt% were obtained.

The silicon-based particles including the formed carbon coating layer and a Li₂O powder were evenly mixed in a mortar. The mixed powder was introduced into a tubular furnace and thermally treated at 800 °C while supplying Ar gas. The resultant was cooled, and thereby a silicon-based composite containing lithium oxide was obtained.

As a result of carrying out ICP analysis to determine the lithium (Li) content of the obtained silicon-based composite, it was found that the Li content was about 5 wt%.

In Comparative Example 2, the silicon-based particles including the formed carbon coating layer were prepared first and then thermally treated along with a lithium compound. This is because, due to the very high reactivity of lithium, the formation of a compound due to the combination of lithium and the silicon-based particles is not controlled, causing the metal crystals of lithium and silicon to grow rapidly.

**[Table 1]**

| | Metal element | Total doping metal content (wt%) | Concentration gradient |
|---|---|---|---|
| Example 1 | Mg | 8 | O |
| Example 2 | Mg | 8 | O |
| Example 3 | Mg | 8 | O |
| Comparative Example 1 | Mg | 8 | X |
| Comparative Example 2 | Li | 5 | X |

### <Production of negative electrode and lithium secondary battery>

### Examples 1A to 3A

A homogeneous negative electrode slurry was prepared by mixing the silicon-based composite prepared in Example 1 as a negative electrode active material, carbon black as a conducting agent, polyacrylic acid (PAA) as a binder, and water (H₂O) as a solvent, wherein the weight ratio of the negative electrode active material, the conducting agent and the binder was 80:10:10. The obtained negative electrode slurry was applied to one surface of a copper current collector, dried, rolled, and then punched to a predetermined size, and thereby a negative electrode was obtained.

A coin-type half-cell of Example 1A was produced by using Li metal as a counter electrode, interposing a polyolefin separator between the negative electrode and the Li metal, and injecting an electrolyte prepared by dissolving LiPF₆ at a concentration of 1 M in a solvent consisting of ethylene carbonate (EC) and diethyl carbonate (EMC) mixed in a volume ratio of 30:70.

The coin-type half-cells of Examples 2A and 3A were produced in the same manner as in Example 1A except that the silicon-based composites of Examples 2 and 3 were respectively used.

### Comparative Examples 1A and 2A

The negative electrodes and coin-type half-cells of Comparative Examples 1A and 2A were produced in the same manner as in Example 1A except that the silicon-based composites of Comparative Examples 1 and 2 were respectively used as a negative electrode active material.

### Experimental Example 1: Evaluation of initial efficiency, cycle characteristics and degree of change in electrode thickness

The batteries of Examples 1A to 3A and Comparative Examples 1A and 2A were subjected to charging and discharging to evaluate initial efficiency, cycle characteristics and a degree of change in electrode thickness, and the results are shown in Table 2.

Each of the batteries produced in Examples 1A to 3A and Comparative Examples 1A and 2A was charged at 25 °C at a constant current (CC) of 0.1C up to 5 mV and then subjected to 1^{st} charging that was carried out at constant voltage (CV) up to a charge current of 0.005C (cut-off current). After maintaining the battery for 20 minutes and then performing discharging at a constant current (CC) of 0.1C until 1.5 V, initial efficiency was evaluated.

After the battery was repeatedly charged and discharged at 0.5C until the 40^{th} cycle, a capacity retention rate thereof was determined to evaluate the cycle characteristics thereof. After the evaluation of the cycle characteristics was completed, the 41^{st} cycle was terminated when the battery was in a charged state. Subsequently, the battery was disassembled, a thickness thereof was measured, and a degree of change in electrode thickness was calculated.

**[Table 2]**

| | Initial efficiency (%) | Capacity retention rate after 40^{th} cycle (%) | Degree of change in electrode thickness (%) |
|---|---|---|---|
| Example 1A | 82.5 | 60.5 | 45.7 |
| Example 2A | 82.3 | 54.3 | 48.1 |
| Example 3A | 82.2 | 55.7 | 47.6 |
| Comparative Example 1A | 82.1 | 51.6 | 50.8 |
| Comparative Example 2A | 82.7 | 33.4 | 55.3 |

Referring to Table 2, it was observed that since Mg was contained in the silicon-based composite so as to have a concentration gradient, Examples 1A to 3A had a higher capacity retention rate and a smaller degree of change in electrode thickness than Comparative Example 1A where Mg was contained in the silicon-based composite so as not to have a concentration gradient. It is speculated that this was because of the presence of a concentration gradient in which the concentration of Mg gradually increased from the particle center toward the particle surface, which led to a high Mg content at the particle surface, reducing the volume expansion of the negative electrode active material, thereby further improving the performance of the lithium secondary battery such as cycle characteristics.

In addition, it was observed that Examples 1A to 3A had a higher capacity retention rate and a smaller degree of change in electrode thickness than Comparative Example 2A where Li was used as a doping metal. In the case of Comparative Example 2A, it is speculated that since Li which is extremely vulnerable to moisture was used as a doping metal, gas was generated during the production of the negative electrode slurry and the electrode was unstable, and therefore, the performance of the lithium secondary battery was poor.

### <Preparation of silicon-based composite: 2>

### Example 4

A powder including a Si powder and a silicon oxide (SiO₂) powder uniformly mixed in a molar ratio of 1:1 and magnesium (Mg) were thermally treated under a reduced-pressure atmosphere so that a silicon oxide vapor derived from the Si and the silicon oxide and an Mg vapor were generated at the same time, and thereby reactants in a gas phase were reacted. In the case of Mg, the heat-treatment temperature was reduced from 900 °C to 700 °C at a rate of 5 °C/min so that the rate of Mg vapor generation was reduced and the relative amount of Mg capable of reacting with the silicon oxide vapor was accordingly reduced. The reacted composite was precipitated by cooling and pulverized with a jet mill, and thereby silicon-based composite particles which had an average particle diameter (Dso) of about 5 µm and in which Mg was contained so as to have a concentration gradient were obtained.

The obtained silicon-based composite was introduced into a tube-shaped (tubular) furnace and subjected to CVD under a mixed gas of Ar and CH₄, and thereby a silicon-based composite which included a formed carbon coating layer having a carbon content of about 5 wt% and in which an Mg compound was contained so as to have a concentration gradient was obtained.

As a result of carrying out inductively coupled plasma (ICP) analysis to determine the Mg content of the obtained silicon-based composite, it was found that the Mg content was about 8 wt%. The Mg content according to a position in the silicon-based composite particles was determined using an SEM-EDAX analysis instrument (80 mm² EDS detector, EMAX manufactured by HORIBA, Ltd.).

In the silicon-based particles, the concentration of Mg at a central portion (Rc₁₀) was about 3 wt% based on the total weight of the relevant portion, and the concentration of Mg at a surface portion (Rs₁₀) was about 12 wt% based on the total weight of the relevant portion.

The ICP analysis was performed by the following method. For the ICP analysis, a predetermined amount (about 0.01 g) of the obtained silicon-based composite was precisely aliquoted, transferred to a platinum crucible, and completely decomposed on a hot plate by adding nitric acid, hydrofluoric acid and sulfuric acid thereto. By using an inductively coupled plasma atomic emission spectrometer (ICP-AES, Perkin-Elmer 7300), a reference calibration curve was obtained by measuring the intensity of a standard liquid, which was prepared using a standard solution (5 mg/kg), at an intrinsic wavelength of an Mg element. Subsequently, a pre-treated sample solution and a blank sample were introduced into the spectrometer, and by way of measuring the intensity of each component to calculate an actual intensity, calculating the concentration of each component based on the obtained calibration curve, and performing a conversion such that the sum of the calculated concentrations of the components was equal to a theoretical value, the Mg content of the obtained silicon-based composite was determined.

### Example 5

A silicon-based composite was prepared in the same manner as in Example 4 except that the heat-treatment temperature for the doping of Mg was reduced from 850 °C to 750 °C at a rate of 3 °C/min.

As a result of determining the Mg content of the silicon-based composite using an SEM-EDAX analysis instrument, it was found that in the silicon-based particles, the concentration of Mg at a central portion (Rc₁₀) was about 8.5 wt% based on the total weight of the relevant portion, and the concentration of Mg at a surface portion (Rs₁₀) was about 7 wt% based on the total weight of the relevant portion.

### Example 6

A silicon-based composite was prepared in the same manner as in Example 4 except that the heat-treatment temperature for the doping of Mg was reduced from 950 °C to 650 °C at a rate of 10 °C/min.

As a result of determining the Mg content of the silicon-based composite using an SEM-EDAX analysis instrument, it was found that in the silicon-based particles, the concentration of Mg at a central portion (Rc₁₀) was about 13.5 wt% based on the total weight of the relevant portion, and the concentration of Mg at a surface portion (Rs₁₀) was about 1.5 wt% based on the total weight of the relevant portion.

### Comparative Example 3

A silicon-based composite which had an average particle diameter (D₅₀) of about 5 µm and in which an Mg compound was contained so as not to have a concentration gradient was prepared in the same manner as in Example 4 except that the heat-treatment temperature for the doping of Mg was not raised and constantly maintained at 700 °C.

As a result of carrying out ICP analysis to determine the Mg content of the obtained silicon-based composite, it was found that the Mg content was about 3 wt%.

### Comparative Example 4

A silicon-based composite which had an average particle diameter (D₅₀) of about 5 µm and in which an Mg compound was contained so as not to have a concentration gradient was prepared in the same manner as in Example 4 except that the heat-treatment temperature for the doping of Mg was not raised and constantly maintained at 800 °C.

As a result of carrying out ICP analysis to determine the Mg content of the obtained silicon-based composite, it was found that the Mg content was about 8 wt%.

### Comparative Example 5

Silicon monoxide (SiO) having an average particle diameter (D₅₀) of about 4 µm was introduced into a tube-shaped (tubular) furnace and subjected to CVD under a mixed gas of Ar and CH₄, and thereby silicon-based particles which had an average particle diameter (D₅₀) of about 5 µm and included a formed carbon coating layer having a carbon content of about 5 wt% were obtained.

The silicon-based particles including the formed carbon coating layer and a Li₂O powder were evenly mixed in a mortar. The mixed powder was introduced into a tubular furnace and thermally treated at a constant temperature of 800 °C while supplying Ar gas. The resultant was cooled, and thereby a silicon-based composite containing lithium oxide was obtained.

As a result of carrying out ICP analysis to determine the Li content of the obtained silicon-based composite, it was found that the Li content was about 5 wt%.

In Comparative Example 5, the silicon-based particles including the formed carbon coating layer were prepared first and then thermally treated along with a lithium compound. This is because, due to the very high reactivity of lithium, the formation of a compound due to the combination of lithium and the silicon-based particles is not controlled, causing the metal crystals of lithium and silicon to grow rapidly.

**[Table 3]**

| | Metal element | Total doping metal content (wt%) | Concentration gradient |
|---|---|---|---|
| Example 4 | Mg | 8 | O |
| Example 5 | Mg | 8 | O |
| Example 6 | Mg | 8 | O |
| Comparative Example 3 | Mg | 3 | X |
| Comparative Example 4 | Mg | 8 | X |
| Comparative Example 5 | Li | 5 | X |

### <Production of negative electrode and lithium secondary battery>

### Examples 4A to 6A

A homogeneous negative electrode slurry was prepared by mixing the silicon-based composite prepared in Example 4 as a negative electrode active material, carbon black as a conducting agent, PAA as a binder, and water (H₂O) as a solvent, wherein the weight ratio of the negative electrode active material, the conducting agent, and the binder was 80:10:10. The obtained negative electrode slurry was applied to one surface of a copper current collector, dried, rolled, and then punched to a predetermined size, and thereby a negative electrode was obtained.

A coin-type half-cell of Example 4A was produced by using Li metal as a counter electrode, interposing a polyolefin separator between the negative electrode and the Li metal, and injecting an electrolyte prepared by dissolving LiPF₆ at a concentration of 1 M in a solvent consisting of ethylene carbonate (EC) and diethyl carbonate (EMC) mixed in a volume ratio of 30:70.

The coin-type half-cells of Examples 5A and 6A were produced in the same manner as in Example 4A except that the silicon-based composites of Examples 5 and 6 were respectively used.

### Examples 4B to 6B

A homogeneous negative electrode slurry was prepared by mixing a mixed negative electrode active material, carbon black as a conducting agent, CMC and SBR as binders, and water (H₂O) as a solvent, wherein the mixed negative electrode active material was prepared by mixing the silicon-based composite prepared in Example 4 as a negative electrode active material and natural graphite in a weight ratio of 1:9, and wherein the weight ratio of the mixed negative electrode active material, the conducting agent, CMC, and SBR was 95.8:1:1.7:1.5. The obtained negative electrode slurry was applied to one surface of a copper current collector, dried, rolled, and then punched to a predetermined size, and thereby a negative electrode was obtained.

A bi-cell type lithium secondary battery of Example 4B was produced by using a positive electrode including LiNi_{0.6}Co_{0.2}Mn_{0.2}O₂ as a positive electrode active material as a counter electrode, interposing a polyolefin separator between the negative electrode and the positive electrode, and injecting an electrolyte prepared by dissolving LiPF₆ at a concentration of 1 M in a solvent consisting of ethylene carbonate (EC) and diethyl carbonate (EMC) mixed in a volume ratio of 30:70.

The bi-cell type lithium secondary batteries of Examples 5B and 6B were produced in the same manner as in Example 4B except that the silicon-based composites of Examples 5 and 6 were respectively used instead of the silicon-based composite of Example 4.

### Comparative Examples 3A to 5A

A negative electrode and a coin-type half-cell were produced in the same manner as in Example 4A except that the silicon-based composites of Comparative Examples 3 to 5 were respectively used instead of the silicon-based composite of Example 4.

### Comparative Examples 3B to 5B

A negative electrode and a bi-cell type lithium secondary battery were produced in the same manner as in Example 4B except that the silicon-based composites of Comparative Examples 3 to 5 were respectively used instead of the silicon-based composite of Example 4.

### Experimental Example 2: Evaluation of reactivity with electrolyte

Each of the silicon-based composite of Examples 4 to 6 and Comparative Examples 3 and 4 before forming a carbon coating layer and an electrolyte prepared by dissolving LiPF₆ at a concentration of 1 M in a solvent consisting of EC and EMC in a volume ratio of 30:70 were placed in an empty pouch and sealed, and after subsequently storing the pouch in a high-temperature chamber (60 °C) for six hours, the thickness of the pouch was measured. When the negative electrode active material and the electrolyte are stored together at high temperature, gas is generated, causing the thickness of the pouch to increase. Therefore, by way of measuring the thickness of the pouch, it is possible to evaluate the reactivity of the negative electrode active material with the electrolyte. The results are shown in FIG. 1.

### Experimental Example 3: Evaluation of initial efficiency

The batteries of Examples 4A to 6A and Comparative Examples 3A to 5A were subjected to charging and discharging to evaluate initial efficiency, and the results are shown in Table 4.

Each of the batteries produced in Examples 4A to 6A and Comparative Examples 3A to 5A was charged at 25 °C at a constant current (CC) of 0.1C up to 5 mV and then subjected to 1^{st} charging that was carried out at constant voltage (CV) up to a charge current of 0.005C (cut-off current). After maintaining the battery for 20 minutes and then performing discharging at a constant current (CC) of 0.1C until 1.5 V, initial efficiency was evaluated.

**[Table 4]**

| | Initial efficiency (%) |
|---|---|
| Example 4A | 82.2 |
| Example 5A | 81.9 |
| Example 6A | 82.0 |
| Comparative Example 3A | 77.5 |
| Comparative Example 4A | 82.1 |
| Comparative Example 5A | 82.7 |

### Experimental Example 4: Evaluation of capacity retention rate and gas generation amount

The batteries of Examples 4B to 6B and Comparative Examples 3B to 5B were subjected to charging and discharging to evaluate a capacity retention rate and a gas generation amount, and the results are shown in Table 5.

Each of the batteries produced in Examples 4B to 6B and Comparative Examples 3B to 5B was charged at 45 °C at a constant current (CC) of 1C up to 4.25 V and then subjected to 1^{st} charging that was carried out at constant voltage (CV) up to a charge current of 0.05C (cut-off current). Subsequently, the battery was maintained for 20 minutes, and then discharging was performed at a constant current (CC) of 1C until 2.5 V. After the battery was subjected to the 100^{th} cycle, a capacity retention rate thereof was determined, and after terminating the cycle when the battery was in a discharged state, a gas generation amount was measured using gas chromatography (GC-FID/TCD) analysis. For the gas generation amount, the relative amount calculated based on the gas generation amount in Comparative Example 4B (regarded as 100%) is provided.

**[Table 5]**

| | Capacity retention rate (%) | Gas generation amount (%) |
|---|---|---|
| Example 4B | 92.2 | 92 |
| Example 5B | 91.2 | 95 |
| Example 6B | 91.1 | 81 |
| Comparative Example 3B | 88.7 | 85 |
| Comparative Example 4B | 90.2 | 100 |
| Comparative Example 5B | 89.2 | 128 |

Referring to FIG. 1, Table 4 and Table 5, it was confirmed that the secondary batteries including the silicon-based composites of Examples 4 to 6 exhibited desirable overall performance as compared to those including the silicon-based composites of Comparative Examples 3B to 5B in terms of side reactions with an electrolyte being prevented and the effects of improving the initial efficiency, improving the capacity retention rate and reducing gas generation being provided.

In the case of the silicon-based composites of Examples 4 to 6, since there was a concentration gradient in which the doping metal content decreased from a central portion toward a surface portion, causing side reactions with the electrolyte and a gas generation amount to be reduced, an excellent capacity retention rate was exhibited as compared to the silicon-based composite of Comparative Example 4 having a similar doping metal content therethroughout.

In addition, in the case of the secondary battery including the silicon-based composite of Comparative Example 3, it was confirmed that there was little side reaction with the electrolyte because of a low overall Mg content, but significantly lower initial efficiency and capacity retention rate than those of Examples 4 to 6 were exhibited.

In addition, in the case of the silicon-based composite of Comparative Example 5, it was confirmed that since Li, not Mg, was used as a doping metal, there was a significant side reaction with the electrolyte, an excessively large amount of gas was generated, and performance was degraded in terms of the capacity retention rate.

Preferred embodiments of the present invention:
[Embodiment 1] A silicon-based composite comprising:
   silicon-based particles; and
   one or more doping metals selected from the group consisting of Mg, Ca, Al, Na and Ti,
   wherein, in the silicon-based particle, there is a doping metal concentration gradient from a particle center toward a particle surface.
[Embodiment 2] The silicon-based composite of embodiment 1, wherein, in the silicon-based particle, there is a concentration gradient in which a concentration of the doping metal gradually increases from the particle center toward the particle surface.
[Embodiment 3] The silicon-based composite of embodiment 2, wherein the concentration of the doping metal gradually increases from the particle center toward the particle surface such that the concentration gradient is continuous.
[Embodiment 4] The silicon-based composite of embodiment 2, wherein, in the silicon-based particle, the concentration of the doping metal at Rs₁₀, which is the point corresponding to 10% of the total volume of the silicon-based particle from the particle surface toward the particle center, is 1% to 1,000% higher than the concentration of the doping metal at Rc₁₀, which is the point corresponding to 10% of the total volume of the silicon-based particle from the particle center toward the particle surface.
[Embodiment 5] The silicon-based composite of embodiment 1, wherein, in the silicon-based particle, there is a concentration gradient in which a concentration of the doping metal gradually decreases from the particle center toward the particle surface.
[Embodiment 6] The silicon-based composite of embodiment 5, wherein the concentration of the doping metal gradually decreases from the particle center toward the particle surface such that the concentration gradient is continuous.
[Embodiment 7] The silicon-based composite of embodiment 5, wherein, in the silicon-based particle, the concentration of the doping metal at Rc₁₀, which is the point corresponding to 10% of the total volume of the silicon-based particle from the particle center toward the particle surface, is 1% to 1,000% higher than the concentration of the doping metal at Rs₁₀, which is the point corresponding to 10% of the total volume of the silicon-based particle from the particle surface toward the particle center.
[Embodiment 8] The silicon-based composite of embodiment 1, wherein the silicon-based particle comprises one or more selected from the group consisting of Si, a silicon oxide particle (SiOₓ, 0<x≤2) and a mixture thereof.
[Embodiment 9] The silicon-based composite of embodiment 1, wherein the silicon-based composite comprises:
   one or more selected from the group consisting of Si, a silicon oxide particle (SiOₓ, 0≤x<2) and a mixture thereof; and
   a metal compound comprising at least one of a metal oxide and a metal silicate.
[Embodiment 10] The silicon-based composite of embodiment 1, comprising the doping metal in an amount of 0.1 wt% to 30 wt%.
[Embodiment 11] The silicon-based composite of embodiment 1, having an average particle diameter (D₅₀) of 0.01 µm to 30 µm.
[Embodiment 12] The silicon-based composite of embodiment 1, further comprising a carbon coating layer formed on the silicon-based particle.
[Embodiment 13] A negative electrode for a lithium secondary battery, the negative electrode comprising:
   a negative electrode current collector; and
   a negative electrode active material layer formed on the negative electrode current collector,
   wherein the negative electrode active material layer comprises the silicon-based composite of embodiment 1.
[Embodiment 14] The negative electrode of embodiment 13, wherein the negative electrode active material layer further comprises a carbon-based negative electrode active material.
[Embodiment 15] A lithium secondary battery comprising the negative electrode for a lithium secondary battery of embodiment 13.

## Claims

1. A silicon-based composite comprising:
silicon-based particles; and
one or more doping metals selected from the group consisting of Mg, Ca, Al, Na and Ti,
wherein, in the silicon-based particle, there is a concentration gradient in which a concentration of the doping metal gradually increases from the particle center toward the particle surface,
wherein the concentration of the doping metal gradually increases from the particle center toward the particle surface such that the concentration gradient is continuous, and
wherein, in the silicon-based particle, the concentration of the doping metal at Rs10, which is the point corresponding to 10% of the total volume of the silicon-based particle from the particle surface toward the particle center, is 1% to 1,000% higher than the concentration of the doping metal at Rc10, which is the point corresponding to 10% of the total volume of the silicon-based particle from the particle center toward the particle surface.

2. The silicon-based composite of claim 1, wherein the silicon-based particle comprises one or more selected from the group consisting of Si, a silicon oxide particle (SiOx, 0<x≤2) and a mixture thereof.

3. The silicon-based composite of claim 1, wherein the silicon-based composite comprises:
one or more selected from the group consisting of Si, a silicon oxide particle (SiOx, 0≤x<2) and a mixture thereof; and
a metal compound comprising at least one of a metal oxide and a metal silicate.

4. The silicon-based composite of claim 1, comprising the doping metal in an amount of 0.1 wt% to 30 wt%.

5. The silicon-based composite of claim 1, having an average particle diameter (D50) of 0.01 µm to 30 µm.

6. The silicon-based composite of claim 1, further comprising a carbon coating layer formed on the silicon-based particle.

7. A negative electrode for a lithium secondary battery, the negative electrode comprising:
a negative electrode current collector; and
a negative electrode active material layer formed on the negative electrode current collector,
wherein the negative electrode active material layer comprises the silicon-based composite of claim 1.

8. The negative electrode of claim 7, wherein the negative electrode active material layer further comprises a carbon-based negative electrode active material.

9. A lithium secondary battery comprising the negative electrode for a lithium secondary battery of claim 7.
